# EUROPÄISCHE PATENTSCHRIFT

(11) **EP 4 487 456 B1**
(45) Veröffentlichungstag und Bekanntmachung des Hinweises auf die Patenterteilung: **08.04.2026**
(21) Anmeldenummer: 23703698.3
(22) Anmeldetag: 01.02.2023
(51) Int. Cl.: H02K 5/22, H02K 5/136, H02G 3/22

(54) **ANTRIEB MIT ELEKTROMOTOR**
DRIVE WITH AN ELECTRIC MOTOR
ENTRAÎNEMENT AVEC UN MOTEUR ÉLECTRIQUE

(30) Priorität: 28.02.2022 CN 202210186409; 13.04.2022 DE 102022001283
(43) Veröffentlichungstag der Anmeldung: 08.01.2025
(73) Patentinhaber: SEW-EURODRIVE GmbH & Co. KG, 76646 Bruchsal (DE)
(72) Erfinder: JINCHANG, Li, Tianjin (CN)
(74) Vertreter: Tüngler, Eberhard
(86) Internationale Anmeldenummer: PCT/EP2023/025044
(87) Internationale Veröffentlichungsnummer: WO 2023/160873

(56) Entgegenhaltungen:
- CN-A- 107 707 066
- CN-A- 112 510 887
- CN-A- 113 922 553
- DE-A1- 4 009 625
- DE-B4- 19 838 171
- DE-U1- 29 902 093
- KR-B1- 101 956 881

## Beschreibung

Die Erfindung betrifft einen Antrieb mit Elektromotor.

Es ist allgemein bekannt, dass ein Antrieb einen Elektromotor aufweist, wobei der Elektromotor umrichtergespeist ausführbar ist und der Antrieb eine Last antreibt.

**Aus der** CN 113 922 553 A **ist als nächstliegender Stand der Technik ein Antrieb mit Elektromotor bekannt.**

**Aus der** DE 40 09 625 A1 **ist eine Kabeldurchführung bekannt.**

Aus der DE 198 38 171 B4 ist ein Elektromotor mit Bremse bekannt.

Aus der EP 0 920 111 B1 ist ein Gleichrichter für ein Fahrzeug bekannt.

Aus der DE 10 2011 083 263 A1 ist eine elektrische Maschine bekannt.

Aus der EP 3 251 198 B1 ist ein Elektromotor mit elektromagnetisch betätigbarer Bremse bekannt.

Aus der DE 10 2008 028 604 A1 ist ein Elektromotor mit elektromagnetisch betätigbarer Bremse bekannt.

Aus der DE 10 2008 028 661 A1 ist ein Elektromotor mit Geber bekannt.

Aus der DE 10 2018 006 725 A1 ist eine elektromagnetisch betätigbare Bremsanordnung bekannt.

Der Erfindung liegt daher die Aufgabe zugrunde, einen Antrieb mit Elektromotor weiterzubilden, wobei eine erhöhte Sicherheit ausgebildet sein soll.

Erfindungsgemäß wird die Aufgabe bei dem Antrieb nach den in Anspruch 1 angegebenen Merkmalen gelöst.

Von Vorteil ist dabei, dass die Kabeldurchführung sicher, insbesondere explosionssicher, ausführbar ist und trotzdem der Elektromotor einfach und kostengünstig herstellbar ist. Insbesondere ist die Buchse zur Aufnahme der Vergussmasse geeignet. Somit werden bei der Herstellung des Elektromotors die Versorgungsleitungen durch den Innenbereich der Buchse geführt und dann mit Vergussmasse vergossen. Durch Aufstecken des Schraubteils auf die Buchse und nachfolgendes Schraubverbinden des Schraubteils mit dem Innengewindebereich des Gehäuseteils ist die Kabeldurchführung schnell und einfach herstellbar. Es muss nur eine Mutter am Ende auf die Buchse aufgeschraubt werden, so dass diese Mutter die Buchse an dem Schraubteil festlegt.

Die Buchse und das Schraubteil sind einfach als Drehteile herstellbar.

Bei einer vorteilhaften Ausgestaltung steht der Kragenbereich des Schraubteils radial hervor, wobei die radiale Richtung auf die Schraubachse des Schraubteils und/oder des Innengewindebereichs und/oder des Außengewindes bezogen ist,
welcher am Gehäuseteil, insbesondere am Gehäuseteil am Rand der Stufenbohrung, anliegt. Von Vorteil ist dabei, dass der Kragenbereich des Schraubteils als Anschlag des Schraubteils am Gehäuseteil und als Anschlag der Mutter am Schraubteil dient.

**Erfindungsgemäß** ist zwischen Schraubteil und Gehäuseteil eine Dichtung, insbesondere O-Ring, angeordnet, welche vom Kragenbereich des Schraubteils derart verformt ist oder wird, dass die Dichtung sowohl am Kragenbereich des Schraubteils als auch am an den Kragenbereich des Schraubteils angrenzenden Bereich des Schraubteils anliegt. Von Vorteil ist dabei, dass auch die Mikrospalte zwischen Gehäuseteil und Schraubteil abgedichtet sind.

Bei einer vorteilhaften Ausgestaltung ist die Buchse topfförmig und/oder becherförmig ausgeführt. Von Vorteil ist dabei, dass die Vergussmasse einfach aufnehmbar ist.

Bei einer vorteilhaften Ausgestaltung weist die Buchse einen Bodenbereich auf, durch den die Versorgungsleitungen hindurchgeführt sind, wobei die Buchse einen hohlzylindrischen Wandbereich aufweist, der mittels des Bodenbereichs einseitig und/oder an seinem ersten axialen Endbereich abgedeckt ist,
wobei der Wandbereich und der Bodenbereich einstückig, insbesondere einteilig, ausgeformt ist,

insbesondere wobei der hohlzylindrische Wandbereich den Hohlraumbereich begrenzt. Von Vorteil ist dabei, dass eine einfache Herstellung ermöglicht ist.

Bei einer vorteilhaften Ausgestaltung ist der Antrieb ein Getriebemotor, wobei der Elektromotor ein Getriebe des Getriebemotors antreibt,
insbesondere wobei der Elektromotor von einem Umrichter des Antriebs gespeist wird,
insbesondere wobei der Umrichter mit dem Elektromotor zusammen integriert ausgebildet ist, insbesondere also zumindest ein Gehäuseteil, insbesondere das Deckelteil, des Elektromotors gehäusebildende Funktion für den Umrichter ausführt. Von Vorteil ist dabei, dass der Antrieb mit hoher Sicherheit ausbildbar ist, insbesondere mit Explosionssicherheit.

Bei einer vorteilhaften Ausgestaltung ist zwischen Buchse und Schraubteil eine weitere Dichtung, insbesondere O-Ring, angeordnet, welche von der Mutter derart elastisch verformt ist oder wird, dass die weitere Dichtung an das Schraubteil und an die Buchse angedrückt ist oder wird. Von Vorteil ist dabei, dass auch die Mikrospalte zwischen Buchse und Schraubteil abdichtbar sind und somit eine hohe Sicherheit erreichbar ist.

Bei einer vorteilhaften Ausgestaltung ist das Schraubteil als Rotationskörper ausgeführt, in welchen das Außengewinde eingeschnitten ist. Von Vorteil ist dabei, dass eine einfache Herstellung ermöglicht ist.

Bei einer vorteilhaften Ausgestaltung ist die Buchse als Rotationskörper ausgeführt, in welchen das Außengewinde eingeschnitten ist und Ausnehmungen zur Durchführung der Versorgungsleitungen ausgebildet sind, insbesondere wobei die Ausnehmungen durch einen oder den Bodenbereich der Buchse durchgehend eingebracht sind,

insbesondere wobei der Quotient aus dem lichten Innendurchmesser der jeweiligen Ausnehmung und dem Außendurchmesser der jeweiligen durch hindurchgeführten Versorgungsleitung zwischen Einen Wert aufweist, der kleiner ist als 1,2 und größer ist als 1,01. Von Vorteil ist dabei, dass eine einfache Herstellung ermöglicht ist.

Bei einer vorteilhaften Ausgestaltung ist im Gehäuseteil ein Lagersitz vorgesehen, in welchem ein Lager zur drehbaren Lagerung der Rotorwelle des Elektromotors aufgenommen ist,
wobei das Gehäuseteil mit einem Statorgehäuse des Elektromotors des Antriebs verbunden ist
wobei die Statorwicklung des Elektromotors im Statorgehäuse aufgenommen ist. Von Vorteil ist dabei, dass eine einfache Herstellung ermöglicht ist.

Bei einer vorteilhaften Ausgestaltung ist die Spule als Ringwicklung ausgeführt, deren Ringachse koaxial zur Drehachse der Rotorwelle ausgerichtet ist. Von Vorteil ist dabei, dass eine einfache Herstellung ermöglicht ist.

Bei einer vorteilhaften Ausgestaltung ist auf die Rotorwelle ein ringartiger Mitnehmer aufgesteckt, welcher eine Außenverzahnung aufweist, mit welcher eine Innenverzahnung eines Bremsbelagträgers im Eingriff ist,
sodass der Bremsbelagträger zur Rotorwelle parallel zur Drehachse der Rotorwelle verschiebbar angeordnet ist und mit dem Mitnehmer drehfest verbunden ist,
wobei der Mitnehmer mit der Rotorwelle drehfest verbunden ist,
wobei eine ferromagnetische Ankerscheibe in Richtung der Drehachse der Rotorwelle zwischen dem Bremsbelagträger und dem Magnetkörper angeordnet ist,
wobei die Ankerscheibe mit dem Magnetkörper drehfest verbunden ist und in Richtung der Drehachse der Rotorwelle verschiebbar angeordnet ist,
insbesondere indem Bolzen in Bohrlöcher des Magnetkörpers eingesteckt sind und durch Ausnehmungen der Ankerscheibe hindurchragen,
wobei ein eine Bremsfläche aufweisendes Teil, insbesondere Reibblech oder das Gehäuseteil, mit dem Magnetkörper drehfest verbunden ist und auf der von der Ankerscheibe abgewandten Seite des Bremsbelagträgers angeordnet ist,
wobei am Magnetkörper abgestützte Federelemente auf die Ankerscheibe drücken. Von Vorteil ist dabei, dass die Sicherheit erhöht ist, da bei Stromausfall die Bremse automatisch, insbesondere also naturgesetzlich, einfällt.

Bei einer vorteilhaften Ausgestaltung wird bei Bestromung der Spule die Ankerscheibe entgegen der von den Federelementen erzeugten Federkraft zum Magnetkörper hingezogen,
wobei bei Nichtbestromung der Spule die Ankerscheibe von den am Magnetkörper abgestützten Federelementen auf den Bremsbelagträger gedrückt wird, sodass der Bremsbelagträger mit seiner von der Ankerscheibe abgewandten Seite auf die Bremsfläche gedrückt wird. Von Vorteil ist dabei, dass bei Stromausfall die Bremse einfällt und somit die Sicherheit erhöht ist.

Bei einer vorteilhaften Ausgestaltung fungiert der Kragenbereich des Schraubteils als axialer Anschlag des Schraubteils am Gehäuseteil. Von Vorteil ist dabei, dass eine einfache Herstellung ermöglicht ist.

Bei einer vorteilhaften Ausgestaltung gleicht der größte Außendurchmesser des Kragenbereichs der Buchse dem insbesondere größten Außendurchmesser des Schraubteils in dem axialen Bereich zwischen dem Kragenbereich der Buchse und dem Außengewinde des Schraubteils,

insbesondere sodass das Schraubteil bündig an den Kragenberiech der Buchse angrenzt und/oder anschließt. Von Vorteil ist dabei, dass Buchse und Schraubteil am gleichen Innendurchmesser der Stufenbohrung anliegt. Von diesem Bereich ist der Gewindeberiech mittels einer Stufe abgetrennt.

Bei einer vorteilhaften Ausgestaltung ist in Richtung der Drehachse der Rotorwelle die Kabeldurchführung auf der von dem Statorgehäuse des Elektromotors abgewandten Seite des Lagersitzes angeordnet,
insbesondere wobei am Statorgehäuse ein weiterer Anschlusskasten ausgeformt ist, in welchen die Enden der Wicklungsdrähte der Statorwicklung geführt sind,
insbesondere so, dass die Bremse und die Statorwicklungen unterschiedliche Anschlusskästen aufweisen. Von Vorteil ist dabei, dass eine einfache Herstellung ermöglicht ist.

Weitere Vorteile ergeben sich aus den Unteransprüchen. Die Erfindung ist im beigefügten Anspruchssatz definiert.

Die Erfindung wird nun anhand von schematischen Abbildungen näher erläutert:

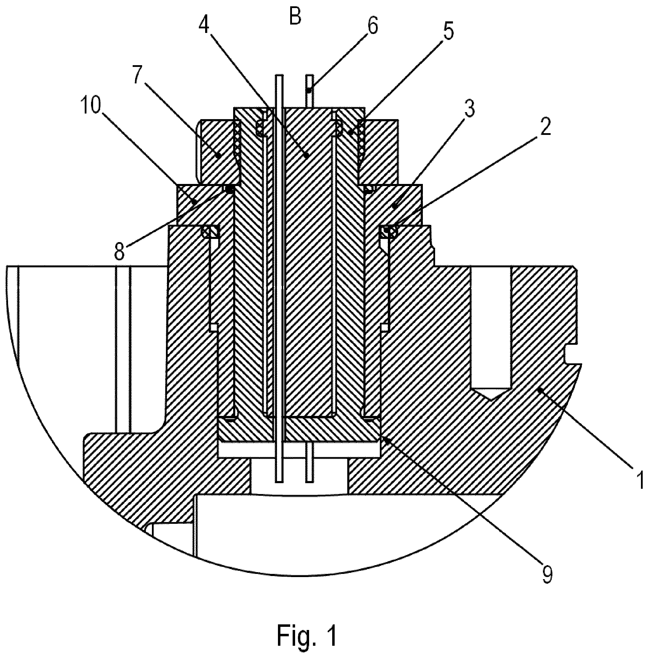

In der Figur 1 ist ein vergrößerter Ausschnitt eines Querschnitts durch einen Bereich einer explosionsgeschützten Kabeldurchführung durch ein Gehäuseteil 1 bei einem erfindungsgemäßen Antrieb mit Bremse dargestellt.

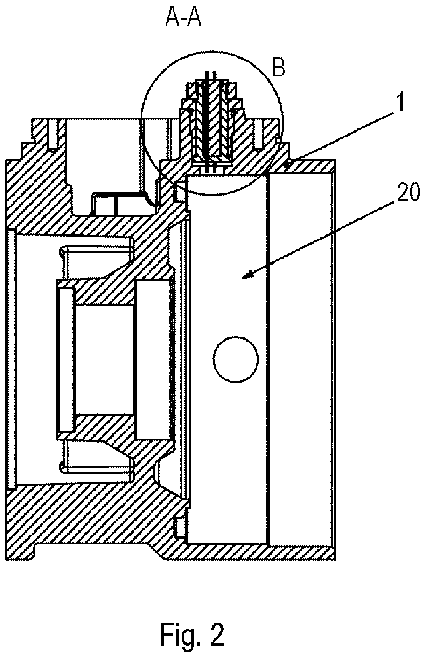

In der Figur 2 ist der Querschnitt vollständig dargestellt.

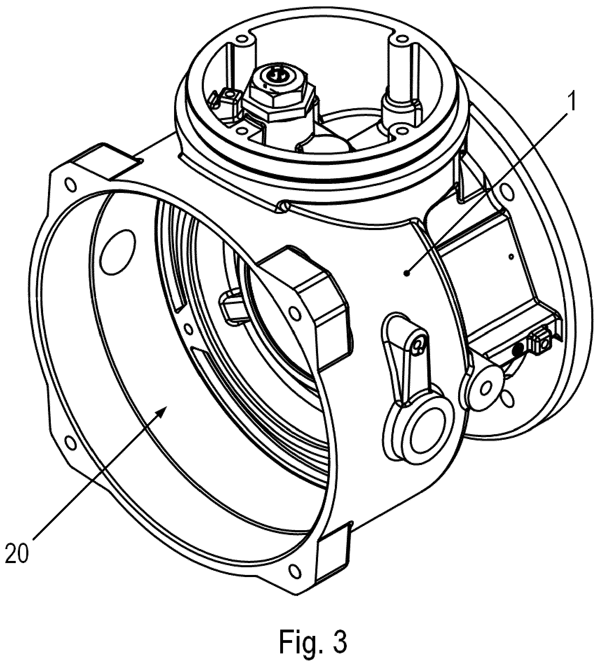

In der Figur 3 ist eine Schrägansicht des Gehäuseteils 1 dargestellt.

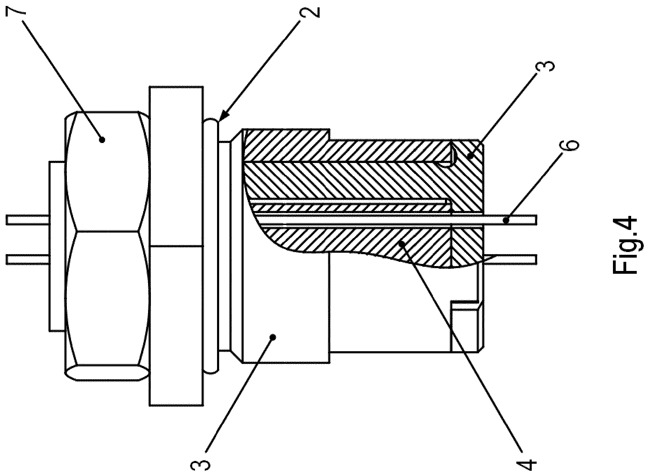

In der Figur 4 ist die Kabeldurchführung angeschnitten dargestellt.

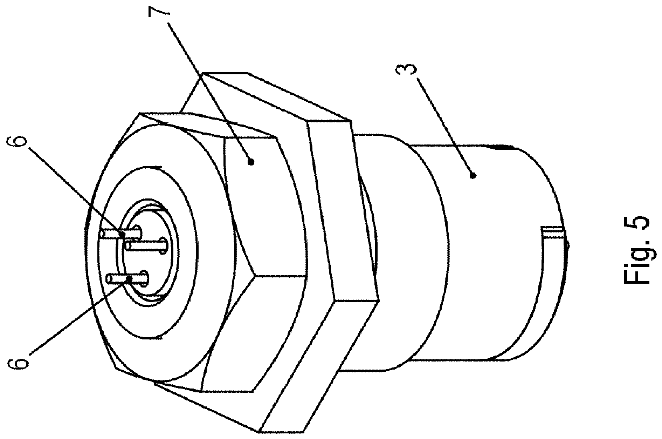

In der Figur 5 ist die Kabeldurchführung in Schrägansicht dargestellt.

Wie in den Figuren dargestellt, weist das Gehäuseteil 1 einen Raumbereich 20, in welchem ein Magnetkörper der Bremse aufnehmbar ist.

Im Gehäuseteil 1 ist ein Lagersitz vorgesehen, in welchem ein Lager zur drehbaren Lagerung der Rotorwelle des Elektromotors aufgenommen wird. Das Gehäuseteil 1 ist mit dem Statorgehäuse des Elektromotors des Antriebs verbunden.

Im Magnetkörper ist eine Spule aufgenommen, deren Magnetfeld vom Magnetkörper umgelenkt wird.

Auf die Rotorwelle ist ein ringartiger Mitnehmer aufgesteckt und drehfest verbunden. Eine Außenverzahnung des Mitnehmers ist im Eingriff mi einer Innenverzahnung eines Bremsbelagträgers. Somit ist der Bremsbelagträger drehfest mit der Rotorwelle verbunden und relativ zur Rotorwelle verschiebbar angeordnet.

Am Lagerflansch ist eine fein bearbeitete Fläche als Bremsfläche vorgesehen.

Eine ferromagnetische Ankerscheibe, die insbesondere aus Stahl gefertigt ist, ist drehfest mit dem Magnetkörper verbunden und relativ zum Magnetkörper verschiebbar ist. Bei Bestromung der Spule wird die Ankerscheibe entgegen der von an dem Magnetkörper abgestützten Federelementen erzeugten Federkraft zum Magnetkörper hingezogen. Bei Nichtbestromung der Spule drücken die Federelemente die Ankerscheibe vom Magnetkörper weg zum Bremsbelagträger hin, der somit auf die am Lagerflansch ausgebildete Bremsfläche gedrückt wird.

Der Wicklungsdraht wird durch eine Kabeldurchführung, die in einer Ausnehmung des Gehäuseteils 1 aufgenommen ist, in ein am Gehäuseteil 1 ausgeformten Anschlusskastenunterteil geführt.

Somit ist die Spule aus dem Anschlusskasten versorgbar. Die Bremse ist explosionsgeschützt ausgeführt. Daher bewirkt die Kabeldurchführung eine dichte und explosionsgeschützte Ausführung.

Hierzu ist im Gehäuseteil 1 eine durchgehende Gewindebohrung vorgesehen, in welche ein Schraubteil 3 mit seinem Außengewinde eingeschraubt ist.

Eine Dichtung 2 ist zwischen dem Schraubteil 3 und dem Gehäuseteil 1 angeordnet. Somit ist der Gewindebereich zur äußeren Umgebung hin abgedichtet.

Das Schraubteil 3 weist einen radial hervorstehenden Kragenbereich auf, der am Rand der Gewindebohrung aufliegt. Somit ist die axiale Position des Schraubteils 3 zum Gehäuseteil 1 hin festgelegt. Das Schraubteil 3 ist vorzugsweise als Rotationskörper ausgeführt, in welchen das Außengewinde eingearbeitet ist.

Der Gewindebereich steht gegenüber den an ihn axial angrenzenden Bereichen des Schraubteils 3 radial hervor.

Die axiale Richtung ist parallel gerichtet zur Richtung der Gewindeschraubachse.

Das Schraubteil 3 ist auf eine becherartige Buchse 5 aufgesteckt, deren Boden ebenfalls als Kragenbereich radial hervorragt, so dass dieser radial hervorragende Kragenbereich der Buchse 5 als axialer Anschlag für das Schraubteil 3 fungiert.

An dem vom Boden der Buchse 5 abgewandten Endbereich der Buchse 5 ist ein Außengewinde in die Buchse 5 eingeschnitten, auf welchen eine Mutter 7, insbesondere Sechskantmutter und/oder Schraubmutter, mit ihrem Innengewinde aufgeschraubt ist und dabei auf den Kragenbereich des Schraubteils 3 drückt, so dass das Schraubteil 3 gegen den Kragenbereich der Buchse 5 gedrückt wird.

Die Versorgungsleitungen 6, insbesondere Kabel, für die Spule sind durch jeweilige Ausnehmungen des Bodens der Buchse 5 und deren Innenraumbereich hindurchgeführt.

Im Innenraumbereich ist Vergussmasse 4 angeordnet, so dass die Versorgungsleitungen 6 von Vergussmasse umgeben sind, welche den Innenraumbereich der Buchse 5 zumindest teilweise ausfüllt.

Insbesondere weist die Buchse 5 einen hohlzylindrischen Bereich auf, der an seinem ersten axialen Endbereich mittels des plattenförmig ausgeformten Bodens samt dessen nach radial außen hervorragenden Bereichs verschlossen ist. Der Innenraumbereich des hohlzylindrischen Bereichs ist mit der Vergussmasse 4 befüllt.

An dem vom Boden abgewandten axialen Endbereich weist die Buchse 5 an ihrer radialen Innenseite eine Vertiefung auf, also eine nach radial außen gerichtete Einbuchtung.

Die Vergussmasse 4 füllt diese Einbuchtung oder Vertiefung auf.

Dadurch ist die Vergussmasse 4 nach dem Aushärten formschlüssig verbunden mit der Buchse 5.

Mittels der Vergussmasse 4 in der Kabelverschraubung sind die Versorgungsleitungen explosionsfest radial durch das Gehäuseteil 1 durchgeführt.

Eine weitere Dichtung 8 ist zwischen der Mutter 7 und dem Schraubteil 3 angeordnet und berührt die Buchse 5, insbesondere zumindest nach dem Aufschrauben der Mutter 7, welche nicht nur auf den Kragenbereich des Schraubteils 3 drückt, sondern auch auf die weitere Dichtung 8.

Im Bereich der der Vertiefung der Buchse 5, insbesondere in dem von der Vertiefung in axialer Richtung überdeckten Bereich, ist die Wandstärke der Buchse 5 verringert.

Bei weiteren erfindungsgemäßen Ausführungsbeispielen ist das Lager nicht im Gehäuseteil 1 aufgenommen, sondern das Gehäuseteil 1 mit einem Lagerflansch, welcher mit dem Statorgehäuse verbunden, des Elektromotors des Antriebs verbunden. Im Lagerflansch ist ein Lager zur drehbaren Lagerung der Rotorwelle des Elektromotors aufgenommen.

### Bezugszeichenliste

1 Gehäuseteil
2 Dichtung
3 Schraubteil
4 Vergussmasse
5 Buchse
6 Versorgungsleitung
7 Mutter
8 weitere Dichtung
9 Kragenbereich der Buchse
10 Kragenbereich des Schraubteils
20 Raumbereich zur Aufnahme des Magnetkörpers der Bremse

## Patentansprüche

1. Antrieb mit Elektromotor,
wobei der Elektromotor ein Gehäuseteil (1) aufweist, an welchem ein Anschlusskastenunterteil ausgeformt ist, auf das ein Deckelteil aufsetzbar und/oder verbindbar ist zur Bildung eines Anschlusskastens der Bremse und/oder des Elektromotors,
wobei im Gehäuseteil ein Magnetkörper aufgenommen ist, in welchem eine Spule aufgenommen ist, insbesondere in welchem eine Vertiefung zur Aufnahme einer Spule vorgesehen ist,
wobei die elektrischen Versorgungsleitungen (6) der Spule mittels einer Kabeldurchführung durch eine durch das Gehäuseteil durchgehenden Stufenbohrung, welche einen Innengewindebereich aufweist, durchgeführt sind,
wobei die Kabeldurchführung eine Buchse (5) aufweist, auf welche ein insbesondere hohles Schraubteil (3) aufgesteckt ist, das mit seinem Außengewinde in den Innengewindebereich eingeschraubt ist,
wobei das Schraubteil an einem an der Buchse, insbesondere bezogen auf die Schraubachse des Schraubteils radial, hervorstehenden Kragenbereich (9) der Buchse anliegt, insbesondere der in axialer Richtung als Anschlag für das Schraubteil fungiert,
wobei eine Mutter (7), insbesondere Schraubmutter und/oder Sechskantmutter, mit ihrem Innengewinde auf ein Außengewinde der Buchse aufgeschraubt ist, so dass die Mutter an einem Kragenbereich (10) des Schraubteils anliegt und gegen den Kragenbereich (10) des Schraubteils gedrückt ist,
wobei der Kragenbereich (10) des Schraubteils an seinem von der Mutter abgewandten Seite, am Gehäuseteil anliegt, insbesondere am Gehäuseteil am Rand der Stufenbohrung anliegt,
wobei die Buchse, insbesondere ein zylindrischer Hohlraumbereich der Buchse, mit Vergussmasse (4) zumindest teilweise befüllt ist,
wobei die Versorgungsleitungen von der Spule in den Anschlusskasten durch durch die Buchse durchgehende Ausnehmungen und durch die Vergussmasse hindurchgeführt sind,
wobei **in dem Elektromotor eine elektromagnetisch betätigbare Bremse angeordnet ist,**
**wobei zwischen Schraubteil und Gehäuseteil eine** Dichtung (2), **insbesondere O-Ring, angeordnet ist, welche vom Kragenbereich (10) des Schraubteils derart verformt ist oder wird, dass die Dichtung sowohl am Kragenbereich (10) des Schraubteils als auch am an den Kragenbereich (10) des Schraubteils angrenzenden Bereich des Schraubteils anliegt.**

2. Antrieb nach Anspruch 1,
**dadurch gekennzeichnet, dass**
der Kragenbereich (10) des Schraubteils radial hervorsteht,
wobei die radiale Richtung auf die Schraubachse des Schraubteils und/oder des Innengewindebereichs und/oder des Außengewindes bezogen ist,
welcher am Gehäuseteil, insbesondere am Gehäuseteil am Rand der Stufenbohrung, anliegt.

3. Antrieb nach einem der vorangegangenen Ansprüche,
**dadurch gekennzeichnet, dass**
die Buchse topfförmig und/oder becherförmig ausgeführt ist
und/oder dass
die Buchse einen Bodenbereich aufweist, durch den die Versorgungsleitungen hindurchgeführt sind, wobei die Buchse einen hohlzylindrischen Wandbereich aufweist, der mittels des Bodenbereichs einseitig und/oder an seinem ersten axialen Endbereich abgedeckt ist,
wobei der Wandbereich und der Bodenbereich einstückig, insbesondere einteilig, ausgeformt ist,
insbesondere wobei der hohlzylindrische Wandbereich den Hohlraumbereich begrenzt.

4. Antrieb nach einem der vorangegangenen Ansprüche,
**dadurch gekennzeichnet, dass**
der Antrieb ein Getriebemotor ist, wobei der Elektromotor ein Getriebe des Getriebemotors antreibt,
insbesondere wobei der Elektromotor von einem Umrichter des Antriebs gespeist wird,
insbesondere wobei der Umrichter mit dem Elektromotor zusammen integriert ausgebildet ist, insbesondere also zumindest ein Gehäuseteil, insbesondere das Deckelteil, des Elektromotors gehäusebildende Funktion für den Umrichter ausführt.

5. Antrieb nach einem der vorangegangenen Ansprüche,
**dadurch gekennzeichnet, dass**
zwischen Buchse und Schraubteil eine weitere Dichtung, insbesondere O-Ring, angeordnet ist, welche von der Mutter derart elastisch verformt ist oder wird, dass die weitere Dichtung an das Schraubteil und an die Buchse angedrückt ist oder wird.

6. Antrieb nach einem der vorangegangenen Ansprüche,
**dadurch gekennzeichnet, dass**
das Schraubteil als Rotationskörper ausgeführt ist, in welchen das Außengewinde eingeschnitten ist.

7. Antrieb nach einem der vorangegangenen Ansprüche,
**dadurch gekennzeichnet, dass**
die Buchse als Rotationskörper ausgeführt ist, in welchen das Außengewinde eingeschnitten ist und Ausnehmungen zur Durchführung der Versorgungsleitungen ausgebildet sind, insbesondere wobei die Ausnehmungen durch einen oder den Bodenbereich der Buchse durchgehend eingebracht sind,
insbesondere wobei der Quotient aus dem lichten Innendurchmesser der jeweiligen Ausnehmung und dem Außendurchmesser der jeweiligen durch hindurchgeführten Versorgungsleitung zwischen Einen Wert aufweist, der kleiner ist als 1,2 und größer ist als 1,01.

8. Antrieb nach einem der vorangegangenen Ansprüche,
**dadurch gekennzeichnet, dass**
im Gehäuseteil ein Lagersitz vorgesehen ist, in welchem ein Lager zur drehbaren Lagerung der Rotorwelle des Elektromotors aufgenommen ist,
wobei das Gehäuseteil mit einem Statorgehäuse des Elektromotors des Antriebs verbunden ist
wobei die Statorwicklung des Elektromotors im Statorgehäuse aufgenommen ist.

9. Antrieb nach einem der vorangegangenen Ansprüche,
**dadurch gekennzeichnet, dass**
die Spule als Ringwicklung ausgeführt ist, deren Ringachse koaxial zur Drehachse der Rotorwelle ausgerichtet ist.

10. Antrieb nach einem der vorangegangenen Ansprüche,
**dadurch gekennzeichnet, dass**
auf die Rotorwelle ein ringartiger Mitnehmer aufgesteckt ist, welcher eine Außenverzahnung aufweist, mit welcher eine Innenverzahnung eines Bremsbelagträgers im Eingriff ist,
sodass der Bremsbelagträger zur Rotorwelle parallel zur Drehachse der Rotorwelle verschiebbar angeordnet ist und mit dem Mitnehmer drehfest verbunden ist,
wobei der Mitnehmer mit der Rotorwelle drehfest verbunden ist,
wobei eine ferromagnetische Ankerscheibe in Richtung der Drehachse der Rotorwelle zwischen dem Bremsbelagträger und dem Magnetkörper angeordnet ist,
wobei die Ankerscheibe mit dem Magnetkörper drehfest verbunden ist und in Richtung der Drehachse der Rotorwelle verschiebbar angeordnet ist,
insbesondere indem Bolzen in Bohrlöcher des Magnetkörpers eingesteckt sind und durch Ausnehmungen der Ankerscheibe hindurchragen,
wobei ein eine Bremsfläche aufweisendes Teil, insbesondere Reibblech oder das Gehäuseteil, mit dem Magnetkörper drehfest verbunden ist und auf der von der Ankerscheibe abgewandten Seite des Bremsbelagträgers angeordnet ist,
wobei am Magnetkörper abgestützte Federelemente auf die Ankerscheibe drücken.

11. Antrieb nach einem der vorangegangenen Ansprüche,
**dadurch gekennzeichnet, dass**
bei Bestromung der Spule die Ankerscheibe entgegen der von den Federelementen erzeugten Federkraft zum Magnetkörper hingezogen wird,
wobei bei Nichtbestromung der Spule die Ankerscheibe von den am Magnetkörper abgestützten Federelementen auf den Bremsbelagträger gedrückt wird, sodass der Bremsbelagträger mit seiner von der Ankerscheibe abgewandten Seite auf die Bremsfläche gedrückt wird.

12. Antrieb nach einem der vorangegangenen Ansprüche,
**dadurch gekennzeichnet, dass**
der Kragenbereich (10) des Schraubteils als axialer Anschlag des Schraubteils am Gehäuseteil fungiert.

13. Antrieb nach einem der vorangegangenen Ansprüche,
**dadurch gekennzeichnet, dass**
der größte Außendurchmesser des Kragenbereichs (9) der Buchse dem insbesondere größten Außendurchmesser des Schraubteils in dem axialen Bereich zwischen dem Kragenbereich (9) der Buchse und dem Außengewinde des Schraubteils gleicht,
insbesondere sodass das Schraubteil bündig an den Kragenberiech (9) der Buchse angrenzt und/oder anschließt.

14. Antrieb nach einem der vorangegangenen Ansprüche,
**dadurch gekennzeichnet, dass**
in Richtung der Drehachse der Rotorwelle die Kabeldurchführung auf der von dem Statorgehäuse des Elektromotors abgewandten Seite des Lagersitzes angeordnet ist,
insbesondere wobei am Statorgehäuse ein weiterer Anschlusskasten ausgeformt ist, in welchen die Enden der Wicklungsdrähte der Statorwicklung geführt sind,
insbesondere so, dass die Bremse und die Statorwicklungen unterschiedliche Anschlusskästen aufweisen.

## Claims

1. A drive with an electric motor,
wherein the electric motor has a housing part (1) on which is formed a lower terminal-box part on/to which a cover part can be mounted and/or connected to form a terminal box of the brake and/or of the electric motor,
wherein in the housing part there is accommodated a magnet body in which a coil is accommodated, in particular in which a depression for accommodating a coil is provided,
wherein the electrical supply lines (6) of the coil are routed by means of a cable gland through a stepped bore which passes through the housing part and has an internal-thread region,
wherein the cable gland has a bush (5) on which an in particular hollow screwing part (3) is mounted, which is screwed into the internal-thread region by its external thread,
wherein the screwing part lies against a collar region (9) of the bush protruding, in particular radially relative to the screwing axis of the screwing part, from the bush, in particular which in the axial direction acts as a stop for the screwing part,
wherein a nut (7), in particular screw nut and/or hexagon nut, is screwed by its internal thread onto an external thread of the bush, so that the nut lies against a collar region (10) of the screwing part and is pressed against the collar region (10) of the screwing part,
wherein the collar region (10) of the screwing part, on its side which faces away from the nut, lies against the housing part, in particular lies against the housing part on the edge of the stepped bore,
wherein the bush, in particular a cylindrical cavity region of the bush, is at least partially filled with potting compound (4),
wherein the supply lines are routed through from the coil into the terminal box through cutouts which pass through the bush and through the potting compound,
wherein an electromagnetically actuated brake is arranged in the electric motor,
wherein between the screwing part and housing part there is arranged a seal (2), in particular O-ring, which has been or is deformed by the collar region (10) of the screwing part in such a way that the seal lies both against the collar region (10) of the screwing part and against that region of the screwing part which adjoins the collar region (10) of the screwing part.

2. A drive according to claim 1,
**characterised in that**
the collar region (10) of the screwing part protrudes radially,
with the radial direction being related to the screwing axis of the screwing part and/or of the internal-thread region and/or of the external thread,
which collar region lies against the housing part, in particular against the housing part on the edge of the stepped bore.

3. A drive according to one of the preceding claims,
**characterised in that**
the bush is embodied in a pot shape and/or in a cup shape,
and/or **in that**
the bush has a base region through which the supply lines are routed, with the bush having a hollow-cylindrical wall region which is covered on one side and/or on its first axial end region by means of the base region,
with the wall region and the base region being formed in one piece, in particular in one part,
in particular with the hollow-cylindrical wall region delimiting the cavity region.

4. A drive according to one of the preceding claims,
**characterised in that**
the drive is a geared motor, with the electric motor driving a gear unit of the geared motor,
in particular with the electric motor being fed by an inverter of the drive,
in particular with the inverter being formed integrated together with the electric motor, in particular therefore at least one housing part, in particular the cover part, of the electric motor performing a housing-forming function for the inverter.

5. A drive according to one of the preceding claims,
**characterised in that**
between the bush and screwing part there is arranged a further seal, in particular O-ring, which is or becomes elastically deformed by the nut in such a way that the further seal is or becomes pressed against the screwing part and against the bush.

6. A drive according to one of the preceding claims,
**characterised in that**
the screwing part is embodied as a rotary body into which the external thread is cut.

7. A drive according to one of the preceding claims,
**characterised in that**
the bush is embodied as a rotary body into which the external thread is cut and cutouts for routeing the supply lines through are formed, in particular with the cutouts being formed continuously through a or the base region of the bush,
in particular with the quotient of the clear internal diameter of the respective cutout and the external diameter of the respective supply line routed through [through] having between a value which is smaller than 1.2 and is greater than 1.01.

8. A drive according to one of the preceding claims,
**characterised in that**
in the housing part there is provided a bearing seat in which a bearing for rotatably mounting the rotor shaft of the electric motor is accommodated,
with the housing part being connected to a stator housing of the electric motor of the drive,
with the stator winding of the electric motor being accommodated in the stator housing.

9. A drive according to one of the preceding claims,
**characterised in that**
the coil is embodied as a ring winding, the ring axis of which is oriented coaxially with the axis of rotation of the rotor shaft.

10. A drive according to one of the preceding claims,
**characterised in that**
on the rotor shaft there is mounted a ring-like driving element which has external gearing with which internal gearing of a brake lining carrier meshes,
so that the brake lining carrier is arranged displaceably parallel to the axis of rotation of the rotor shaft in relation to the rotor shaft and is connected non-rotatably to the driving element,
with the driving element being connected non-rotatably to the rotor shaft,
with a ferromagnetic armature disc being arranged in the direction of the axis of rotation of the rotor shaft between the brake lining carrier and the magnet body,
with the armature disc being connected non-rotatably to the magnet body and being arranged displaceably in the direction of the axis of rotation of the rotor shaft,
in particular **in that** bolts are inserted into drilled holes in the magnet body and protrude through cutouts in the armature disc,
with a part having a braking surface, in particular friction plate or the housing part, being connected non-rotatably to the magnet body and being arranged on that side of the brake lining carrier which faces away from the armature disc,
with spring elements which are supported on the magnet body pressing on the armature disc.

11. A drive according to one of the preceding claims,
**characterised in that**
when the coil is energised the armature disc is drawn towards the magnet body counter to the spring force generated by the spring elements,
with, when the coil is not energised, the armature disc being pressed onto the brake lining carrier by the spring elements which are supported on the magnet body, so that the brake lining carrier is pressed onto the braking surface with its side which faces away from the armature disc.

12. A drive according to one of the preceding claims,
**characterised in that**
the collar region (10) of the screwing part acts as an axial stop for the screwing part on the housing part.

13. A drive according to one of the preceding claims,
**characterised in that**
the greatest external diameter of the collar region (9) of the bush is the same as the in particular greatest external diameter of the screwing part in the axial region between the collar region (9) of the bush and the external thread of the screwing part,
in particular so that the screwing part abuts and/or adjoins the collar region (9) of the bush in a flush manner.

14. A drive according to one of the preceding claims,
**characterised in that**
in the direction of the axis of rotation of the rotor shaft the cable gland is arranged on that side of the bearing seat which faces away from the stator housing of the electric motor,
in particular with there being formed on the stator housing a further terminal box, into which the ends of the winding wires of the stator winding are guided,
in particular such that the brake and the stator windings have different terminal boxes.

## Revendications

1. Entraînement avec moteur électrique,
le moteur électrique présentant une partie carter (1) au niveau de laquelle est formée une partie inférieure de boîte de raccordement, sur laquelle une partie couvercle peut être posée et/ou reliée afin de former une boîte de raccordement du frein et/ou du moteur électrique,
un corps magnétique, au sein duquel est logée une bobine, en particulier au sein duquel est fourni un renfoncement permettant d'accueillir une bobine, étant logé dans la partie carter,
les lignes d'alimentation électrique (6) de la bobine étant réalisées au moyen d'un passage de câble à travers un alésage étagé traversant la partie carter et présentant une région filetée intérieure,
le passage de câble présentant une douille (5) sur laquelle est enfichée une partie vissable (3), en particulier creuse, qui est vissée dans la région filetée intérieure grâce à son filetage extérieur,
la partie vissable s'appuyant, en particulier faisant office de butée pour la partie vissable dans la direction axiale, contre une région de collerette (9), en saillie au niveau de la douille, en particulier radialement par rapport à l'axe de vissage de la partie vissable, de la douille,
un écrou (7), en particulier une vis écrou et/ou un écrou hexagonal, étant vissé par son filetage intérieur sur un filetage extérieur de la douille, de sorte que l'écrou repose contre une région de collerette (10) de la partie vissable et est pressé contre la région de collerette (10) de la partie vissable,
la région de collerette (10) de la partie vissable reposant contre la partie carter sur son côté opposé à l'écrou, en particulier reposant contre la partie carter sur le bord de l'alésage étagé,
la douille, en particulier une région creuse cylindrique de la douille, étant au moins partiellement remplie d'une masse d'enrobage (4),
les conduites d'alimentation de la bobine dans la boîte de raccordement étant traversées par des évidements traversant la douille et par la masse d'enrobage,
un frein à commande électromagnétique étant agencé dans le moteur électrique,
un joint (2), en particulier un joint torique, étant agencé entre la partie vissable et la partie carter, lequel joint se déforme ou est déformé par la région de collerette (10) de la partie vissable de sorte que le joint repose à la fois contre la région de collerette (10) de la partie vissable et contre la région de la partie vissable adjacente à la région de collerette (10) de la partie vissable.

2. Entraînement selon la revendication 1,
**caractérisé en ce que**
la région de collerette (10) de la partie vissable fait saillie radialement,
la direction radiale étant liée à l'axe de vissage de la partie vissable et/ou de la région de filetage intérieur et/ou du filetage extérieur,
laquelle région de collerette repose contre la partie carter, en particulier contre la partie carter au bord de l'alésage étagé.

3. Entraînement selon l'une quelconque des revendications précédentes,
**caractérisé en ce que**
la douille est réalisée en forme de pot et/ou en forme de gobelet
et/ou **en ce que**
la douille présente une région de fond à travers laquelle passent les conduites d'alimentation, la douille présentant une région de paroi cylindrique creuse qui est recouverte par la région de fond d'un côté et/ou au niveau de sa première région d'extrémité axiale,
la région de paroi et la région de fond étant formées d'un seul tenant, en particulier d'une seule pièce,
la région de paroi cylindrique creuse délimitant en particulier la région creuse.

4. Entraînement selon l'une quelconque des revendications précédentes,
**caractérisé en ce que**
l'entraînement est un motoréducteur, le moteur électrique entraînant une transmission du motoréducteur,
le moteur électrique étant en particulier alimenté par un convertisseur de l'entraînement,
le convertisseur étant en particulier intégré avec le moteur électrique, en particulier au moins une partie carter, en particulier la partie couvercle, du moteur électrique remplissant en particulier une fonction de formation de carter pour le convertisseur.

5. Entraînement selon l'une quelconque des revendications précédentes,
**caractérisé en ce que**
entre la douille et la partie vissable est agencé un autre joint, en particulier un joint torique, qui se déforme ou est déformé élastiquement par l'écrou de telle manière que le joint supplémentaire se presse ou est pressé contre la partie vissable et contre la douille.

6. Entraînement selon l'une quelconque des revendications précédentes,
**caractérisé en ce que**
la partie vissable est réalisée sous la forme d'un corps rotatif au sein duquel est taillé le filetage extérieur.

7. Entraînement selon l'une quelconque des revendications précédentes,
**caractérisé en ce que**
la douille est conçue comme un corps rotatif au sein duquel est taillé le filetage extérieur et des évidements sont formés en vue du passage des conduites d'alimentation, les évidements étant en particulier insérés de manière continue à travers une ou la région de fond de la douille,
le rapport entre le diamètre intérieur libre de l'évidement respectif et le diamètre extérieur de la conduite d'alimentation respective passant à travers présentant une valeur inférieure à 1,2 et supérieure à 1,01.

8. Entraînement selon l'une quelconque des revendications précédentes,
**caractérisé en ce que**
un siège de palier, au sein duquel est accueilli un palier permettant une mise sur palier rotative de l'arbre de rotor du moteur électrique, est fourni dans la partie carter,
la partie carter étant reliée à un carter de stator du moteur électrique de l'entraînement l'enroulement de stator du moteur électrique étant accueilli dans le carter de stator.

9. Entraînement selon l'une quelconque des revendications précédentes,
**caractérisé en ce que**
la bobine (3) est réalisée sous la forme d'un enroulement annulaire dont l'axe d'anneau est orienté de manière coaxiale par rapport à l'axe de rotation de l'arbre de rotor.

10. Entraînement selon l'une quelconque des revendications précédentes,
**caractérisé en ce que**
un entraîneur annulaire, présentant une denture extérieure avec laquelle est en prise une denture intérieure d'un support de garniture de frein, est enfiché sur l'arbre de rotor,
de sorte que le support de garniture de frein est agencé par rapport à l'arbre de rotor de manière à pouvoir être déplacé parallèlement à l'axe de rotation de l'arbre de rotor et est relié de manière solidaire en rotation à l'entraîneur,
l'entraîneur est relié de manière solidaire en rotation à l'arbre de rotor,
un disque d'induit ferromagnétique étant agencé entre le support de garniture de frein et le corps magnétique dans le sens de l'axe de rotation de l'arbre de rotor,
le disque d'induit étant relié de manière solidaire en rotation au corps magnétique et étant agencé de manière à pouvoir être déplacé en direction de l'axe de rotation de l'arbre de rotor,
en particulier en insérant des boulons dans des trous d'alésage du corps magnétique et en les faisant passer à travers des évidements du disque d'induit,
une partie présentant une surface de freinage, en particulier une tôle de friction ou la partie carter, étant reliée de manière solidaire en rotation au corps magnétique et étant agencée sur le côté du support de garniture de frein opposé au disque d'induit,
des éléments formant ressort soutenus au niveau du corps magnétique pressant sur le disque d'induit.

11. Entraînement selon l'une quelconque des revendications précédentes, **caractérisé en ce que**
lorsque la bobine est alimentée en courant, le disque d'induit est tiré vers le corps magnétique à l'encontre de la force de ressort générée par les éléments formant ressort,
lorsque la bobine n'est pas alimentée en courant, le disque d'induit étant pressé sur le support de garniture de frein par les éléments formant ressort appuyés sur le corps magnétique, de sorte que le côté du support de garniture de frein opposé au disque d'induit est pressé sur la surface de freinage.

12. Entraînement selon l'une quelconque des revendications précédentes, **caractérisé en ce que**
la région de collerette (10) de la partie vissable fait office de butée axiale de la partie vissable contre la partie carter.

13. Entraînement selon l'une quelconque des revendications précédentes, **caractérisé en ce que**
le plus grand diamètre extérieur de la région de collerette (9) de la douille est égal en particulier au plus grand diamètre extérieur de la partie vissable dans la région axiale entre la région de collerette (9) de la douille et le filetage extérieur de la partie vissable, en particulier de sorte que la partie vissable est adjacente et/ou se raccorde de manière affleurante à la région de collerette (9) de la douille.

14. Entraînement selon l'une quelconque des revendications précédentes,
**caractérisé en ce que**
en direction de l'axe de rotation de l'arbre de rotor, le passage de câble est agencé sur le côté du siège de palier opposé au carter de stator du moteur électrique,
une autre boîte de raccordement, au sein de laquelle les extrémités des fils d'enroulement de l'enroulement de stator sont guidées, étant en particulier formée au niveau du carter de stator,
en particulier de sorte que le frein et les enroulements de stator présentent des boîtes de raccordement différentes.
